# FASCICULE DE BREVET EUROPEEN

(11) **EP 3 803 198 B1**
(45) Date de publication et mention de la délivrance du brevet: **28.08.2024**
(21) Numéro de dépôt: 19726711.5
(22) Date de dépôt: 29.05.2019
(51) Int. Cl.: F21S 41/24, F21S 41/26, F21S 41/20, F21S 41/265, F21S 41/143, F21S 41/663, B60Q 1/00, F21S 43/237, F21S 43/245, F21S 43/249, F21S 43/247, F21S 43/20, F21S 43/40, F21S 41/32, F21S 41/25

(54) **MODULE LUMINEUX POUR VÉHICULE AUTOMOBILE, ET DISPOSITIF D'ÉCLAIRAGE ET/OU DE SIGNALISATION MUNI D'UN TEL MODULE**
LICHTMODUL FÜR EIN AUTOMOBIL-FAHRZEUG
LIGHTING MODULE FOR AUTOMOTIVE VEHICLE

(30) Priorité: 01.06.2018 FR 1854802
(43) Date de publication de la demande: 14.04.2021
(73) Titulaire: Valeo Vision, 93012 Bobigny Cedex (FR)
(72) Inventeur: GROMFELD, Yves, 49000 ANGERS (FR)
(74) Mandataire: Valeo Visibility
(86) Numéro de dépôt international: PCT/EP2019/064107
(87) Numéro de publication internationale: WO 2019/229191

(56) Documents cités:
- EP-A1- 2 711 611
- EP-A1- 2 713 097
- EP-A1- 2 816 277
- EP-B1- 2 816 277
- DE-A1- 102010 016 633
- DE-A1- 102010 056 313
- DE-B4- 102010 056 313
- US-A1- 2016 033 101
- US-A1- 2016 252 226

## Description

La présente invention est relative notamment à un module lumineux pour véhicule automobile, et à un dispositif d'éclairage et/ou de signalisation muni d'un tel module.

Une application préférée concerne l'industrie automobile, pour l'équipement de véhicules, en particulier pour la réalisation de dispositifs susceptibles d'émettre des faisceaux lumineux, encore appelés fonctions d'éclairage et/ou de signalisation, répondant en général à des réglementations. Par exemple, l'invention peut permettre la production d'un faisceau lumineux de type segmenté, notamment pour une signalisation et/ou la participation à des fonctions d'éclairage à l'avant d'un véhicule. On appelle faisceau segmenté, un faisceau dont la projection forme une marque composée de segments de faisceau, chaque segment pouvant être allumé de manière indépendante.

Les feux de signalisation et/ou d'éclairage de véhicules automobiles, sont des dispositifs lumineux qui comprennent une ou plusieurs sources de lumière et une glace qui ferme le feu. De façon simplifiée, la source lumineuse émet des rayons lumineux pour former un faisceau lumineux qui est dirigé vers la glace afin de produire une plage éclairante qui transmet la lumière à l'extérieur du véhicule. Ces fonctions doivent répondre à des réglementations, en matière d'intensité lumineuse et d'angles de visibilité notamment.

Des modules d'éclairage connus sont jusqu'à présent prévus pour émettre de la lumière remplissant une fonction d'éclairage, par exemple :
- un faisceau de croisement, dirigé vers le bas, encore parfois appelé faisceau de code et utilisé en cas de présence d'autres véhicules sur la chaussée ;
- un faisceau de route dépourvu de coupure, et caractérisé par un éclairement maximal dans l'axe du véhicule ;
- un faisceau d'éclairage pour temps de brouillard, caractérisé par une coupure plate et une grande largeur d'éclairement.

Des modules de signalisation sont jusqu'à présent prévus pour émettre de la lumière remplissant une fonction de signalisation, par exemple :
- un faisceau de feu de position, avant ou arrière (également dénommé lanterne) pouvant servir à la signalisation pour la circulation en ville, encore appelé lampe de ville ou veilleuse ;
- un faisceau d'indication de changement de direction, aussi appelé clignotant ;
- un feu de circulation diurne (DRL) ;
- un faisceau d'indication d'activation des freins ou feu stop ;
- un faisceau antibrouillard arrière, qui permet d'être vu par des véhicules suiveurs en temps de brouillard.

En général, l'intensité lumineuse d'une fonction de signalisation est strictement inférieure à celle d'une fonction d'éclairage.

Ces fonctions peuvent concerner une projection vers l'avant, ou vers l'arrière du véhicule.

Les documents DE 10 2010 056 313 A1 et EP 2 816 277 A1 décrivent un module lumineux comprenant au moins deux sources de lumière activables sélectivement et associées à un élément optique commun pour la réalisation de différentes fonctions lumineuses.

Récemment, on a développé des technologies permettant de produire un faisceau segmenté, aussi appelé pixélisé, pour réaliser des fonctions d'éclairage. C'est notamment le cas pour une fonction d'éclairage de type « complément route » généralement basée sur une pluralité d'unités d'illumination comportant chacune une diode électroluminescente, diodes qui peuvent être pilotées individuellement. Le faisceau, résultant des différents segments de faisceau issus de chacune des diodes, est projeté au moyen d'un système optique de projection comprenant généralement une ou plusieurs lentilles. On emploie parfois le vocable anglo-saxon « Matrix Beam » pour ce type de faisceau.

La flexibilité de commande d'un tel faisceau est largement appréciée par les constructeurs automobiles. Par contre, il s'agit d'un élément d'éclairage venant en supplément des autres éléments d'éclairage ou de signalisation.

La présente invention vise à remédier au moins en partie aux inconvénients de techniques actuelles.

La présente invention concerne, suivant un aspect, un module lumineux selon l'objet de la revendication 1. En particulier, le module lumineux comprend une première série d'au moins une unité d'illumination associée à un système optique de projection qui est configuré pour produire un premier faisceau de sortie à partir de lumière issue de la première série, le premier faisceau formant une fonction d'éclairage automobile.

Le module comporte une deuxième série d'au moins une unité d'illumination associée au système de projection, le système de projection étant configuré pour produire un deuxième faisceau de sortie à partir de lumière issue de la deuxième série, le deuxième faisceau formant un fonction de signalisation automobile, et dans lequel les première et deuxième séries comportent des dioptres de sortie situés dans un même plan focal du système de projection.

Ainsi, le système optique de projection (qui peut par exemple comprendre une ou plusieurs lentilles) sert aux deux fonctions et est illuminé dans les deux cas, si bien qu'il y a une continuité d'illumination de ce système même si l'on passe d'une fonction à l'autre. Typiquement, la face de sortie du système de projection (par exemple la face externe d'une lentille de projection) se trouve toujours visible et éclairée même si l'on change la commande d'éclairage du dispositif. Dans un cas préféré, la fonction d'éclairage est une fonction de complément route servant à participer à un feu de route en combinaison avec une module de feu de croisement. La fonction de signalisation peut être un feu de position.

Alors que la technique actuelle suggère que les fonctions d'éclairage et celles de signalisation sont, par essence, distinctes et donc à traiter séparément, la présente invention les mutualise. D'autre part, les puissances lumineuses mises en jeu dans les deux cas sont souvent très éloignées de sorte que réunir ces fonctions est une démarche non conventionnelle.

Selon un autre aspect, la présente invention concerne également un dispositif d'éclairage et de signalisation de véhicule automobile équipé d'au moins un module lumineux indiqué précédemment, et de préférence d'au moins deux modules. De manière avantageuse le système optique de projection de chaque module présente au moins une lentille de projection commune à au moins deux modules, voire à tous les modules.

La présente invention concerne également un véhicule équipé d'au moins un module et/ou un dispositif selon la présente invention. En particulier, on peut utiliser deux dispositifs espacés latéralement à l'avant du véhicule.

Selon l'invention, la deuxième série comprend au moins une source lumineuse et un élément optique configuré pour transmettre de la lumière de la au moins une source lumineuse au système de projection.

Selon l'invention, l'élément optique comprend une pluralité de guides d'ondes. Cela permet de produire une propagation de lumière susceptible de la répartir sur une surface de dioptre de sortie relativement importante, en limitant l'intensité lumineuse produite pour le deuxième faisceau.

Selon l'invention, l'élément optique comprend une pluralité de guides d'ondes et un coupleur optique configuré pour répartir la lumière issue de l'au moins une source lumineuse dans la pluralité de guides d'ondes. La lumière est ainsi dirigée dans plusieurs guides d'ondes. Suivant une possibilité, le coupleur fait partie intégrante de la pièce formant les guides d'ondes, de sorte à produire un élément très rationalisé.

Éventuellement, le coupleur peut être situé à une extrémité des guides d'ondes.

Selon l'invention, la première série comprend une pluralité de sources lumineuses et une pluralité de lentilles chacune associée à une, différente, desdites sources lumineuses et chacune configurée pour transmettre de la lumière de la source lumineuse associée au système de projection.

Suivant l'invention, la pluralité de lentilles est formée sur un premier guide d'ondes de l'au moins un guide d'ondes. Ainsi, la pièce optique considérée a une fonction complexe et il n'est pas nécessaire d'avoir recours à un élément optique différent pour les fonctions d'éclairage et les fonctions de signalisation.

Éventuellement, le premier guide d'ondes est situé entre deux autres guides d'ondes de la pluralité de guides d'ondes.

Selon l'invention, le premier guide d'ondes comprend, pour chaque lentille, un dioptre d'entrée de lumière issue de la source lumineuse associée et des encoches de séparation chacune située entre deux dioptres d'entrée adjacents.

Selon l'invention, les encoches sont configurées pour former une surface de réflexion de rayons lumineux issus de la deuxième série. De cette façon, les encoches servent à la fois de séparateur de dioptre d'entrée pour chacune des lentilles et de surface de réflexion interne permettant de réémettre la lumière le long de guides d'ondes.

Suivant une possibilité, les sources lumineuses de la première série et de la deuxième série sont portées par une même carte électronique. Cela simplifie nettement la conception globale du dispositif.

Avantageusement les sources lumineuses de la première série et de la deuxième série sont alignées. L'implantation sur une carte électronique est de ce fait simplifiée.

Suivant une possibilité, la fonction d'éclairage est une fonction de complément de feu de route.

Suivant une possibilité, la fonction de signalisation est une fonction de feu de position ou de changement de direction.

Dans un mode de réalisation, le système optique de projection comprend une lentille de compensation de courbure de champ et une lentille de sortie.

Avantageusement, les options suivantes peuvent aussi être mises en oeuvre alternativement suivant toute combinaison entre elles :
- Les rayons lumineux issus du au moins un guide d'ondes et ceux issus des lentilles se propagent directement, sans élément intermédiaire, jusqu'au système de projection ;
- La pluralité de guides d'ondes comprend deux guides d'ondes formés symétriquement autour du premier guide d'ondes ;
- Le au moins un guide d'ondes est horizontal.
- La deuxième série comprend une seule source lumineuse. Elle peut être centrée sur le coupleur ;
- Le coupleur comprend trois premières surfaces de réflexion totale interne de la lumière issue de la source lumineuse et puis d'autres surfaces de réflexion de la lumière vers le dioptre de sortie des guides d'ondes ;
- Les sources lumineuses sont des diodes électroluminescentes ;
- Les premiers éléments optiques forment un ensemble issu d'une pièce monobloc venue d'une seule matière.

Dans un mode de réalisation préféré, le module est configuré pour projeter des premiers et deuxième faisceaux lumineux à l'avant d'un véhicule automobile.

D'autres caractéristiques et avantages de la présente invention seront mieux compris à l'aide de la description exemplaire et des dessins parmi lesquels :
- la figure 1 montre en perspective un mode de réalisation d'un dispositif de l'invention intégrant quatre modules ;
- la figure 2 présente plus en détail, suivant une première vue en perspective, une face avant d'un module intégré dans le mode de réalisation de l'invention de la figure 1 ;
- la figure 3 montre une vue en perspective alternative à celle de la figure 2 ;
- la figure 4 présente une vue de face de la face avant d'un module de l'invention ;
- la figure 5 est une vue en coupe suivant les lignes AA de la figure 4 ;
- la figure 6 révèle une vue en coupe suivant les lignes BB de la figure 4 ;
- la figure 7 montre un module de l'invention par sa face arrière.

Sauf indication spécifique du contraire, des caractéristiques techniques décrites en détail pour un mode de réalisation donné peuvent être combinées à des caractéristiques techniques décrites dans le contexte, d'autres modes de réalisation sont décrits à titre exemplaire et non limitatif.

Dans les caractéristiques exposées ci-après, les termes relatifs à la verticalité, l'horizontalité et à la transversalité (ou encore direction latérale), ou leurs équivalents, s'entendent par rapport à la position dans laquelle le module d'éclairage est destiné à être monté dans un véhicule. Les termes « vertical » et « horizontal » sont utilisés dans la présente description pour désigner des directions, suivant une orientation perpendiculaire au plan de l'horizon pour le terme « vertical » (qui correspond à la hauteur des modules), et suivant une orientation parallèle au plan de l'horizon pour le terme « horizontal ». Elles sont à considérer dans les conditions de fonctionnement du dispositif dans un véhicule. L'emploi de ces mots ne signifie pas que de légères variations autour des directions verticale et horizontale soient exclues de l'invention. Par exemple, une inclinaison relativement à ces directions de l'ordre de + ou - 10° est ici considérée comme une variation mineure autour des deux directions privilégiées.

Dans la description qui suit, un dispositif est un ensemble de composants formant un système cohérent, en particulier porté par un même châssis, et susceptible d'être monté sur un véhicule automobile, à l'avant ou à l'arrière. Il peut comprendre un ou plusieurs modules de l'invention ; ces modules sont de préférence, en partie au moins, composés d'un support de sources lumineuses. L'invention peut affecter une paire de dispositifs à un véhicule, en général pour équiper un côté droit et un côté gauche de l'avant ou de l'arrière du véhicule.

Le module de l'invention incorpore pour le moins une première série d'unités d'illumination permettant de générer un faisceau de type segmenté, mais assure aussi de préférence la projection d'au moins un autre faisceau, par l'intermédiaire d'au moins une autre série d'unités d'illumination. Le module de l'invention peut donc être complexe et associer plusieurs types d'unités d'illumination, mais qui peuvent en outre éventuellement partager des composants. En particulier, un mode de réalisation avantageux prévoit de mutualiser, entre les deux séries d'illumination, certains éléments qui peuvent être pris parmi : des sources lumineuses, des éléments optiques. Ainsi, les expressions « première série » et « deuxième série » ne s'entendent pas comme des moyens techniques systématiquement séparés et distincts.

Éventuellement, l'invention peut participer à produire un faisceau de route. Le faisceau de route de base a pour fonction d'éclairer sur une large étendue la scène face au véhicule, mais également sur une distance conséquente, typiquement environ deux cents mètres. Ce faisceau lumineux, de par sa fonction d'éclairage, se situe principalement au-dessus de la ligne d'horizon. Il peut présenter un axe optique d'éclairement légèrement ascendant par exemple. Notamment, la première série d'unités d'illumination qui sera décrite plus loin peut servir à générer une fonction d'éclairage du type « complément route » qui forme une portion d'un feu de route complémentaire à celle produite par un faisceau de champ proche, le complément route cherchant en totalité, ou au moins majoritairement, à éclairer au-dessus de la ligne d'horizon alors que le faisceau de champ proche (qui peut présenter les spécificités d'un feu de croisement) cherche à éclairer en totalité, ou au moins majoritairement, en dessous de la ligne d'horizon.

Le dispositif peut aussi servir à former d'autres fonctions d'éclairage via ou en dehors de celles décrites précédemment.

En ce qui concerne les fonctions de signalisation, un mode de réalisation de l'invention s'adresse à une fonction de feu de position. Cette dernière peut présenter les spécificités suivantes telles que définie dans le Règlement 48 ECE en vigueur à la date de dépôt de la présente demande de brevet:
Comme indiqué précédemment, un intérêt de la présente invention est de produire, au sein d'un même module 1, un premier faisceau remplissant une fonction d'éclairage et un deuxième faisceau remplissant une fonction de signalisation. Des unités d'illumination assurent la génération de ces premier et deuxième faisceaux. En outre, les deux types d'unités d'illumination partagent le même système de projection 2 ; leur dioptre de sortie est ainsi positionné dans le plan focal objet du système de projection 2.

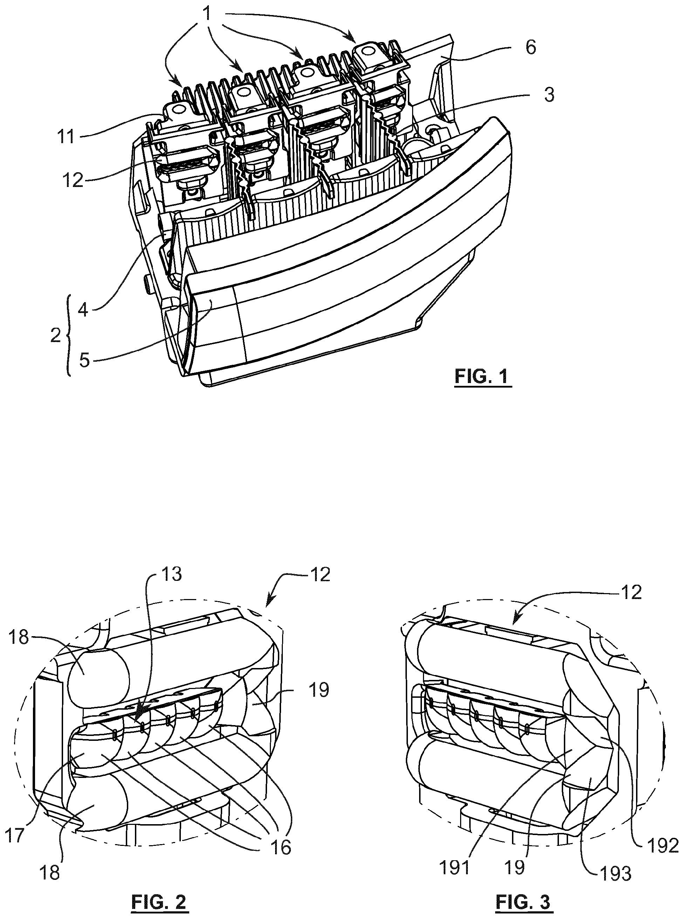

La figure 1 montre un mode de réalisation de l'invention comportant quatre modules lumineux 1. Bien que cela ne soit pas limitatif, les modules 1 peuvent être espacés latéralement les uns des autres, notamment par l'intermédiaire d'une paroi de séparation 3 qui s'étend vers l'avant des modules 1. L'invention comprend potentiellement une pluralité de modules 1 permettant chacun d'émettre au moins un type de faisceaux unitaires. Ils sont de préférence juxtaposés, c'est-à-dire arrangés suivant une direction d'alignement horizontal. Le terme module ne signifie pas que les modules sont des organes forcément totalement distincts ; ils s'entendent simplement comme des organes de formation de faisceaux distincts ; ils peuvent partager des parties communes, comme un support 6 global, une optique de projection 2 ou des éléments électroniques, de commande par exemple. Outre des modules lumineux 1, le dispositif de l'invention peut intégrer des modules d'autres types pour la réalisation d'autres fonctions.

Chaque module lumineux 1 comprend de préférence un support 11 portant un élément optique 12 et une carte à circuit imprimé comprenant des moyens de commande en allumage d'au moins une, mais de préférence d'une pluralité de sources lumineuses, qui peuvent être portées par la carte elle-même. Les sources lumineuses sont positionnées de sorte à générer chacune un flux lumineux entrant dans l'élément optique 12 dont il résulte une projection de lumière, ici en direction d'un élément optique de compensation de courbure de champ 4 (qui peut être une lentille biconvexe), puis d'un élément optique de sortie 5 (également préférentiellement une lentille). L'élément optique de compensation de courbure de champ 4 est défini de manière à compenser l'aberration de champ générée par l'élément optique de sortie 5. Ce dernier est préférentiellement commun aux différents modules 1. La combinaison de l'élément optique de compensation de courbure de champ 4 et de l'élément optique de sortie 5 forme, dans le cas représenté, un système optique de projection 2. Dans le cas où plusieurs modules 1 sont juxtaposés, au moins une partie du système optique de projection 2, et par exemple l'élément optique de sortie 5, est unique pour tous les modules.

Le système de projection 2 reçoit de la lumière depuis une partie amont du module 1 qui comprend la au moins une première unité d'illumination et au moins une deuxième unité d'illumination. Chaque unité d'illumination comprend une source lumineuse. De façon connue en soi, la présente invention peut utiliser des sources lumineuses du type diodes électroluminescentes encore communément appelées LEDs. Il peut éventuellement s'agir de LED(s) organique(s). Notamment, ces LEDs peuvent être dotées d'au moins une puce utilisant la technologie des semi-conducteurs et aptes à émettre une lumière d'intensité avantageusement ajustable selon la fonction d'éclairage et/ou de signalisation à réaliser.

Par ailleurs, le terme source lumineuse s'entend ici d'un ensemble d'au moins une source élémentaire telle une LED apte à produire un flux conduisant à générer en sortie du module de l'invention au moins un faisceau lumineux.

Dans un mode avantageux, la face de sortie de la source est de section rectangulaire, ce qui est typique pour des puces à LEDs.

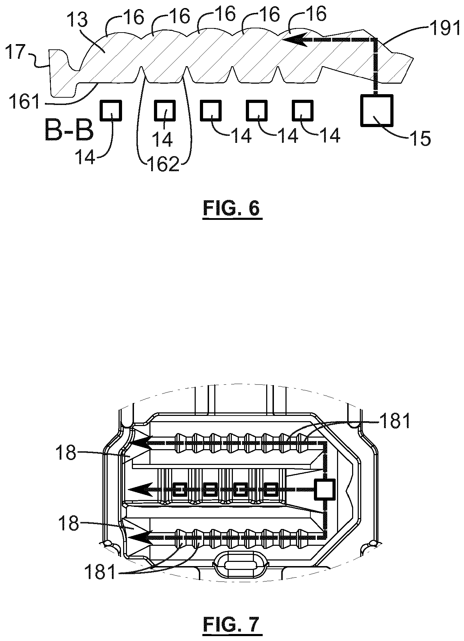

De préférence, comme le montre la figure 6, les sources lumineuses sont organisées en rangées. En particulier, on a représenté une première rangée de premières sources lumineuses 14 servant chacune à produire le premier faisceau en conjonction avec un premier élément optique comprenant ici une pluralité de lentilles 16, et de préférence des microlentilles, chacune associée à une source 14, l'ensemble formant une première unité d'illumination. Apparaît également une deuxième série de sources lumineuses 15 (dans le cas de la figure 6, la deuxième série ne comprend qu'une seule source 15) servant à produire le deuxième faisceau en conjonction avec un deuxième élément optique, l'ensemble formant une deuxième unité d'illumination. Bien que cela ne soit pas limitatif, là où les sources lumineuses 15 peuvent être alignées relativement à la ou les sources lumineuses 14. Dans la figure 6, pour différencier la source 15 des sources 14, la source 15 a été représentée plus grande. Pour autant, la présente invention ne fait aucune hypothèse sur la taille réelle de la source 15 relativement aux autres sources 14. Par commodité, il est d'ailleurs possible d'utiliser un même type de source, notamment un même type de LED, pour toutes les sources. Pour autant, s'agissant d'une fonction de signalisation, la ou les sources 15 peuvent éventuellement présenter une puissance lumineuse globale inférieure à la puissance lumineuse globale des sources 14. Pour y parvenir, on peut choisir des LEDs de types différents et/ou disposer d'un plus grand nombre de sources 14 que de sources 15.

En revenant aux figures 2 et 3, une configuration avantageuse de l'élément optique 12 est présentée. La forme à trois branches qui y est illustrée remplit la fonction d'élément optique des premières unités d'illumination, en comprenant des lentilles 16, et, en même temps, la fonction d'élément optique de la deuxième unité d'illumination, grâce à des guides d'ondes : un premier guide d'onde 17, et ici deux guides d'ondes additionnels 18. Il peut s'agir d'une pièce venue d'une seule matière optique, par exemple du poly-méthacrylate de méthyle. On notera que dans le mode de réalisation représenté, la partie formant le premier guide d'onde 17 forme aussi les lentilles 16. Dans un mode de réalisation alternatif non couvert par l'invention, il serait possible de former de manière distincte la partie optique réalisant le ou les guides d'ondes et la partie optique réalisant les lentilles 16.

Les lentilles 16 sont de préférence juxtaposées bord à bord suivant la direction en largeur du faisceau à produire Chaque lentille 16 présente avantageusement une face de sortie formant une partie de ladite autre face de sortie de la première série d'unités d'illumination.

Les guides d'onde 17,18 sont, dans le cas illustré, superposés, suivant une direction perpendiculaire à la direction en largeur du faisceau issu de la première série d'unité d'illumination. On notera que dans un mode de réalisation alternatif, non couvert par l'invention, il n'est pas nécessaire d'avoir recours à une pluralité de guides d'ondes. Un seul pourrait suffire, notamment dans le corps même de la partie optique servant à constituer les lentilles 16.

On notera des figures, notamment des figures 2 et 3, que la surface de sortie des guides 17, 18 est dans un même plan aux tolérances de fabrication près, que la surface de sortie des lentilles 16 ; dans le cas du guide 17, la surface de sortie est d'ailleurs formée, au moins en partie par la surface de sortie des lentilles 16. Le plan contenant le dioptre de sortie 13 de l'élément optique 12 est de préférence perpendiculaire à l'axe optique du module et/ou parallèle à un dioptre d'entrée du système optique 2 (par exemple la lentille de compensation de courbure de champ 4).

D'une manière générale, l'élément optique 12, comprenant les dioptres de sortie des guides d'ondes et des lentilles, est configuré pour que le système optique de projection 2 soit utilisable en commun pour les guides d'ondes et les lentilles. La distance séparant, suivant l'axe optique, d'une part le dioptre d'entrée du système de projection 2, et d'autre part, la sortie des guides d'ondes et la sortie des lentilles, est donc identique.

Avantageusement, comme c'est le cas dans le mode de réalisation présenté dans les différentes figures, la deuxième unité d'illumination comprend des moyens permettant de propager, à l'intérieur du ou des guides d'ondes, de la lumière issue de la deuxième source 15. Pour y parvenir, alors que, comme le présente la figure 6, la deuxième source 15 est avantageusement alignée avec les sources 14 et de préférence portée par le même support de carte électronique, le module comporte un organe configuré pour diriger le flux lumineux sortant de la source lumineuse 15 suivant la direction longitudinale du ou des guides d'ondes 17,18. Cet organe peut comprendre en particulier des surfaces de réflexion servant à renvoyer de la lumière depuis la face de sortie de la source 15 vers l'intérieur des guides.

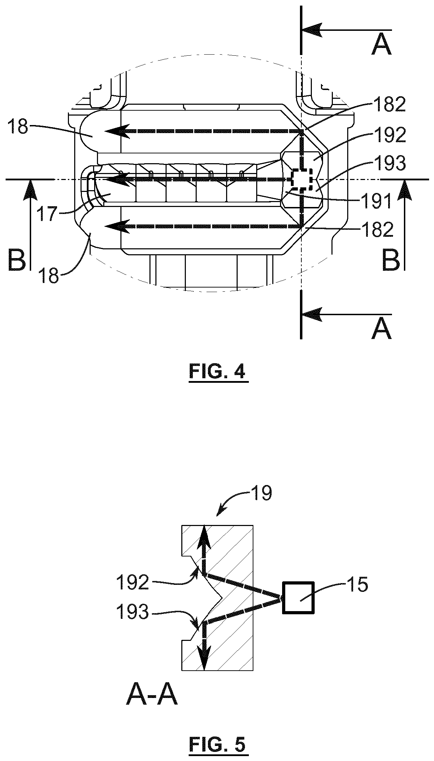

Dans le cas d'un élément optique 12 comportant trois guides d'ondes 17,18, comme il transparaît des figures 2 et 3, ces surface de réflexion sont formées par un coupleur 19 doté, comme les références numériques de la figure 3 l'indiquent, de trois surfaces de réflexion 191,192, 193. La répartition lumineuse qui s'ensuit est reflétée par les chemins lumineux fléchés indiqués aux figures 4 à 7.

Ainsi, en figure 4, la lumière issue de la source lumineuse 15 est dirigée pour partie vers le premier guide d'onde 17 grâce à la surface 191 alors qu'une autre partie de la lumière parvient aux guides d'ondes additionnels 18 par les surfaces 192, 193. Pour ces dernières, le couple comporte en outre avantageusement des deuxièmes surfaces de réflexion 182, réalisant une réflexion additionnelle, de sorte à envoyer le flux suivant la direction longitudinale des guides 18. Compte tenu des réflexions à opérer, il est avantageux que les surfaces de réflexion soient dirigées à 45° relativement à la direction moyenne de la lumière à réfléchir. De préférence, le coupleur 19 est une portion de l'élément optique lui-même, avantageusement monobloc.

La réflexion opérée en sortie de la source lumineuse 15 est plus particulièrement illustrée à la figure 5 où la forme polyédrique de la face externe du coupleur apparaît. Les surfaces 192 et 193 sont avantageusement décalées angulairement de 90°. Avantageusement, les changements de direction de lumière dans le coupleur 19 et dans le ou les guides d'ondes 17,18, s'effectuent par réflexion interne. Les indices optiques des matériaux en jeu et les angles des rayons lumineux sont configurés pour produire cette réflexion interne, qui est de préférence totale. Alternativement, l'une ou l'autre des réflexions peut mettre en jeu une surface réfléchissante, formant miroir.

La figure 6 montre quant à elle la réflexion de lumière depuis la source 15 en direction du premier guide d'onde 17. La lumière entre dans le coupleur 19 jusqu'à être réfléchie par la surface 191 de sorte à suivre une direction moyenne orientée suivant la longueur du guidon 17.

La figure 6 illustre aussi les sources 14 en coopération avec l'élément optique formant à la fois le guidon 17 et les lentilles 16. Ces dernières comprennent chacune un dioptre d'entrée 161 permettant l'admission de lumière depuis les sources 14 à l'intérieur de la lentille 16. De sorte à individualiser les dioptres 161, ceux-ci peuvent être séparés par des encoches 162, par exemple de forme biseautée, formant des creux le long du guide d'ondes 17. La face de sortie de la lentille 16 est par ailleurs avantageusement bombée, de forme curviligne convexe, pour former la partie de dioptre de sortie 13 correspondante.

On comprend que la direction moyenne d'émission des sources 14 et la direction moyenne de propagation à l'intérieur des micros lentilles 16 depuis les sources 14 sont préférentiellement dirigées de l'arrière vers l'avant suivant la profondeur du module 1, soit encore suivant l'axe optique du module 1. Au contraire, la lumière issue du coupleur 19 est introduite dans les guides d'ondes 17,18 dans une direction perpendiculaire à l'axe optique. Elle est ensuite redirigée de proche en proche suivant la direction longitudinale de chaque guide d'onde de sorte à atteindre le dioptre de sortie 13. Cette redirection s'opère de préférence par impact de la lumière sur des surfaces inclinées relativement à la direction longitudinale du guide considéré.

Ainsi, dans le cas du premier guide d'ondes 17, la figure 6 montre que les encoches 162 forment des obstacles à la propagation longitudinale de la lumière issue de la source 15 ; lorsqu'elle interfère avec ces encoches 162, la lumière est redirigée avec un angle différent, produisant une émission de lumière via le dioptre 13. Dans le cas des autres guides d'ondes 18, des reliefs, par exemple sous forme de stries 181, assurent la fonction de redirection. On comprend que cette disposition permet de répartir la lumière le long du dioptre de sortie 13. Ainsi, le niveau d'intensité lumineuse de la fonction de signalisation produite avec l'au moins une deuxième source 15 peut aisément être minimisée. On peut atteindre des niveaux bien plus faibles que celui qui serait obtenu en commandant avec un minimum de puissance possible l'une ou l'autre des premières sources 14.

En fonctionnement, lorsqu'un faisceau d'éclairage est à produire, pour le moins les sources 14 sont activées, toutes ou une partie d'entre elles. Dans la mesure où l'on recherche généralement pour ce type de fonction un niveau d'éclairage élevé, il est aussi possible, bien que non nécessaire, d'activer au moins une des sources 15 en complément. Lorsqu'un faisceau de signalisation est à produire, les sources 14 sont éteintes et seule au moins une des sources 15 est active. Le module 1 est de préférence équipé d'un organe de commande configuré pour contrôler l'activation et la désactivation, ainsi que préférentiellement le niveau de puissance, de chaque source 14, 15. Ce contrôle est de préférence opéré au moins à partir d'un paramètre lié à la nature de la fonction d'éclairage ou de signalisation à produire.

### REFERENCES

- 1.: Module lumineux

- 11.: Support
- 12.: Elément optique
- 13.: Dioptre de sortie
- 14.: Source lumineuse
- 15.: Source lumineuse
- 16.: Lentille

- 161.: Dioptre d'entrée
- 162.: Encoche

- 17.: Premier guide d'ondes
- 18.: Guide d'ondes additionnel

- 181.: Relief de réflexion
- 182.: Deuxième surface de réflexion

- 19.: Coupleur

- 191.: Première surface de réflexion
- 192.: Surface de réflexion additionnelle
- 193.: Surface de réflexion additionnelle

- 2.: Système optique de projection
- 3.: Paroi de séparation
- 4.: Elément optique de compensation de courbure de champ
- 5.: Elément optique de sortie
- 6.: Support

## Revendications

1. Module lumineux (1) de véhicule automobile comprenant une première série d'au moins une unité d'illumination associée à un système optique de projection (2) qui est configuré pour produire un premier faisceau de sortie à partir de lumière issue de la première série, le premier faisceau formant une fonction d'éclairage automobile,
le module comportant une deuxième série d'au moins une unité d'illumination associée au système de projection (2), le système de projection étant configuré pour produire une deuxième faisceau de sortie à partir de lumière issue de la deuxième série, le deuxième faisceau formant un fonction de signalisation automobile,
**caractérisé en ce que** les première et deuxième séries comportent des dioptres de sortie (13) situés dans un même plan focal du système de projection (2),
et dans lequel la deuxième série comprend au moins une source lumineuse (15) et un élément optique (12) configuré pour transmettre de la lumière de la au moins une source lumineuse (15) au système de projection (2), l'élément optique (12) comprenant une pluralité de guide d'ondes (17,18) et un coupleur optique (19) configuré pour répartir de la lumière issue de l'au moins une source lumineuse (15) dans la pluralité de guides d'ondes (17,18) et dans lequel la première série comprend une pluralité de sources lumineuses (14) et une pluralité de lentilles (16) chacune associée à une, différente, desdites sources lumineuses (14) et chacune configurée pour transmettre de la lumière de la source lumineuse associée au système de projection (2), la pluralité de lentilles (16) étant formée sur un premier guide d'ondes (17) de la pluralité de guides d'ondes (17,18) et dans lequel le premier guide d'ondes (17) comprend, pour chaque lentille (16), un dioptre d'entrée (161) de lumière issue de la source lumineuse (14) associée et des encoches (162) de séparation chacune située entre deux dioptres d'entrée (161) adjacents et dans lequel les encoches (162) sont configurées pour former une surface de réflexion de rayons lumineux issus de la source lumineuse (15) de la deuxième série, les dioptres de sortie (13) des première et deuxième séries étant formés par la surface de sortie des guides d'ondes (17, 18), et la surface de sortie du premier guide d'ondes (17) étant formée au moins en partie par la surface de sortie des lentilles (16).

2. Module (1) selon la revendication précédente, dans lequel le coupleur (19) est situé à une extrémité des guides d'ondes (17,18).

3. Module (1) selon l'une des revendications précédentes, dans lequel le premier guide d'ondes (17) est situé entre deux autres guides d'ondes (18) de la pluralité de guides d'ondes (17,18).

4. Module (1) selon l'une des revendications 1 à 3, dans lequel les sources lumineuses (14,15) de la première série et de la deuxième série sont portées par une même carte électronique.

5. Module (1) selon la revendication précédente, dans lequel les sources lumineuses (14,15) de la première série et de la deuxième série sont alignées.

6. Module (1) selon l'une des revendications précédentes, dans lequel la fonction d'éclairage est une fonction de complément de feu de route.

7. Module (1) selon l'une des revendications précédentes, dans lequel la fonction de signalisation est une fonction de feu de position ou de changement de direction.

8. Module (1) selon l'une des revendications précédentes, dans lequel le système optique de projection (2) comprend une lentille (4) de compensation de courbure de champ et une lentille de sortie (5).

9. Dispositif d'éclairage et de signalisation de véhicule automobile comprenant une pluralité de modules (1) selon l'une des revendications précédentes.

10. Dispositif d'éclairage et de signalisation selon la revendication précédente, dans lequel le système optique de projection (2) de chaque module (1) présente au moins une lentille de projection commune à au moins deux modules.

## Patentansprüche

1. Leuchtmodul (1) für ein Kraftfahrzeug, umfassend eine erste Reihe aus mindestens einer Beleuchtungseinheit, die einem optischen Projektionssystem (2) zugeordnet ist, das dazu ausgestaltet ist, ein erstes Austrittsbündel aus Licht zu erzeugen, das aus der ersten Reihe hervorgegangen ist, wobei das erste Bündel eine Kraftfahrzeugbeleuchtungsfunktion bildet,
wobei das Modul eine zweite Reihe aus mindestens einer Beleuchtungseinheit aufweist, die dem optischen Projektionssystem (2) zugeordnet ist, wobei das Projektionssystem dazu ausgestaltet ist, ein zweites Austrittsbündel aus Licht zu erzeugen, das aus der zweiten Reihe hervorgegangen ist, wobei das zweite Bündel eine Kraftfahrzeugsignalisierungsfunktion bildet, **dadurch gekennzeichnet, dass** die ersten und zweiten Reihen Austrittsdiopter (13) aufweisen, die in einer selben Brennebene des Projektionssystems (2) gelegen sind,
und wobei die zweite Reihe mindestens eine Lichtquelle (15) umfasst und ein optisches Element (12), das dazu ausgestaltet ist, Licht der mindestens einen Lichtquelle (15) zu dem Projektionssystem (2) zu übertragen, wobei das optische Element (12) eine Mehrzahl von Wellenleitern (17,18) umfasst und einen optischen Koppler (19), der dazu ausgestaltet ist, Licht, das aus der mindestens einen Lichtquelle (15) hervorgegangen ist, in der Mehrzahl von Wellenleitern (17,18) zu verteilen,
und wobei die erste Reihe eine Mehrzahl von Lichtquellen (14) umfasst und eine Mehrzahl von Linsen (16), von denen jede einer unterschiedlichen der Lichtquellen (14) zugeordnet ist und von denen jede dazu ausgestaltet ist, Licht der zugeordneten Lichtquelle zu dem Projektionssystem (2) zu übertragen, wobei die Mehrzahl von Linsen (16) an einem ersten Wellenleiter (17) der Mehrzahl von Wellenleitern (17,18) gebildet ist,
und wobei der erste Wellenleiter (17), für jede Linse (16), einen Eintrittsdiopter (161) für das aus der zugeordneten Lichtquelle (14) hervorgegangene Licht umfasst und Trennkerben (162), von denen jede zwischen zwei benachbarten Eintrittsdioptern (161) gelegen ist, und wobei die Kerben (162) dazu ausgestaltet sind, eine Reflexionsfläche für Lichtstrahlen zu bilden, die aus der Lichtquelle (15) der zweiten Reihe hervorgegangen sind, wobei die Austrittsdiopter (13) der ersten und zweiten Reihen durch die Austrittsfläche der Wellenleiter (17,18) gebildet werden und wobei die Austrittsfläche des ersten Wellenleiters (17) mindestens teilweise durch die Austrittsfläche der Linsen (16) gebildet wird.

2. Modul (1) nach dem vorhergehenden Anspruch, wobei der Koppler (19) an einem Ende der Wellenleiter (17,18) gelegen ist.

3. Modul (1) nach einem der vorhergehenden Ansprüche, wobei der erste Wellenleiter (17) zwischen zwei anderen Wellenleitern (18) der Mehrzahl von Wellenleitern (17,18) gelegen ist.

4. Modul (1) nach einem der Ansprüche 1 bis 3, wobei die Lichtquellen (14,15) der ersten Reihe und der zweiten Reihe von einer selben elektronischen Karte getragen werden.

5. Modul (1) nach dem vorhergehenden Anspruch, wobei die Lichtquellen (14,15) der ersten Reihe und der zweiten Reihe ausgerichtet sind.

6. Modul (1) nach einem der vorhergehenden Ansprüche, wobei die Beleuchtungsfunktion eine Fernlichtergänzungsfunktion ist.

7. Modul (1) nach einem der vorhergehenden Ansprüche, wobei die Signalisierungsfunktion eine Standlicht- oder Richtungsänderungsfunktion ist.

8. Modul (1) nach einem der vorhergehenden Ansprüche, wobei das optische Projektionssystem (2) eine Linse (4) zur Feldkrümmungskompensation und eine Austrittslinse (5) umfasst.

9. Beleuchtungs- und Signalisierungsvorrichtung für ein Kraftfahrzeug, umfassend eine Mehrzahl von Modulen (1) nach einem der vorhergehenden Ansprüche.

10. Beleuchtungs- und Signalisierungsvorrichtung nach dem vorhergehenden Anspruch, wobei das optische Projektionssystem (2) jedes Moduls (1) mindestens eine Projektionslinse aufweist, die mindestens zwei Modulen gemeinsam ist.

## Claims

1. A luminous module (1) of a motor vehicle comprising a first series of at least one illuminating unit associated with a projecting optical system (2) that is configured to produce a first exit beam from light output from the first series, the first beam forming a motor-vehicle lighting function,
the luminous module comprising a second series of at least one illuminating unit associated with the projecting system (2), the projecting system being configured to produce a second exit beam from light output from the second series, the second beam forming a motor-vehicle signaling function,
**characterized in that** the first and second series comprise exit dioptric interfaces (13) located in the same focal plane of the projecting system (2),
and wherein the second series comprises at least one light source (15) and one optical element (12) configured to transmit light from the at least one light source (15) to the projecting system (2), the optical element (12) comprising a plurality of waveguides (17, 18) and an optical coupler (19) configured to distribute the light output from the at least one light source (15) to the plurality of waveguides (17, 18)
and wherein the first series comprises a plurality of light sources (14) and a plurality of lenses (16) each associated with a different one of said light sources (14) and each configured to transmit the light of the associated light source to the projecting system (2), the plurality of lenses (16) being formed on a first waveguide (17) of the plurality of waveguides (17, 18),
and wherein the first waveguide (17) comprises, for each lens (16), an entrance dioptric interface (161) for light output from the associated light source (14), and separating notches (162) each located between two adjacent entrance dioptric interfaces 161,
and wherein the notches (162) are configured to form a surface for reflecting light rays output from the light source (15) of the second series, the exit dioptric interfaces (13) of the first and second series being formed by the exit surface of the waveguides (17, 18), and the exit surface of the first waveguide (17) being formed at least partially by the exit surface of the lenses (16).

2. The module (1) as claimed in the preceding claim, wherein the coupler (19) is located at one end of the waveguides (17, 18).

3. The module (1) as claimed in one of the preceding claims in combination with either of claims 4 and 5, wherein the first waveguide (17) is located between two other waveguides (18) of the plurality of waveguides (17, 18).

4. The module (1) as claimed in one of claims 1 to 3, wherein the light sources (14, 15) of the first series and of the second series are borne by the same circuit board.

5. The module (1) as claimed in the preceding claim, wherein the light sources (14, 15) of the first series and of the second series are aligned.

6. The module (1) as claimed in one of the preceding claims, wherein the lighting function is a matrix-high-beam function.

7. The module (1) as claimed in one of the preceding claims, wherein the signaling function is a position-light or direction-indicator function.

8. The module (1) as claimed in one of the preceding claims, wherein the projecting optical system (2) comprises a lens (4) for compensating field curvature and an exit lens (5).

9. A motor-vehicle lighting and signaling device comprising a plurality of modules (1) as claimed in one of the preceding claims.

10. The lighting and signaling device as claimed in the preceding claim, wherein the projecting optical system (2) of each module (1) comprises at least one projecting lens common to at least two modules.
